# EUROPÄISCHE PATENTSCHRIFT

(11) **EP 2 705 754 B1**
(45) Veröffentlichungstag und Bekanntmachung des Hinweises auf die Patenterteilung: **04.01.2017**
(21) Anmeldenummer: 12183835.3
(22) Anmeldetag: 11.09.2012
(51) Int. Cl.: A21B 3/15, A21C 13/00

(54) **Backgutträger mit Vliesoberfläche**
Baked good holder with non-woven fabric surface
Support pour gâteau avec une surface en non tissé

(43) Veröffentlichungstag der Anmeldung: 12.03.2014
(73) Patentinhaber: Rolf, Hans-Martin, 33729 Bielefeld (DE); Rolf, Gerhard, 33739 Bielefeld (DE)
(72) Erfinder: ROLF, Hans-Martin, 33729 Bielefeld (DE); ROLF, Gerhard, 33739 Bielefeld (DE)
(74) Vertreter: Hess, Peter K. G.

(56) Entgegenhaltungen:
- EP-A2- 0 235 037
- AT-B- 320 555
- DE-A1- 10 009 280
- DE-U1- 8 812 104
- DE-U1- 9 400 814
- DE-U1- 29 802 388
- DE-U1- 29 905 242
- FR-A1- 2 931 035
- US-A1- 2003 148 010

## Beschreibung

### 1. Technisches Gebiet

Die Erfindung betrifft einen Backgutträger für Bäckereien zur Lagerung und zum Transport von Backgut, insbesondere von Teiglingen für Brötchen. Derartige Backgutträger werden als Gärgutträger bezeichnet, wenn sie zum Gären von Teiglingen verwendet werden. Backgutträger können auch Peelboards sein, wie sie zum Transport und zur Gärung von Teiglingen in industriellen Backanlagen verwendet werden.

### 2. Stand der Technik

Für die Herstellung von Gebäck aller Art wird in Bäckereien Teig mit mikrobiologischen Treibhilfen, wie z. B. Hefe oder Sauerteig, angesetzt und zu Teiglingen geformt. Diese Teiglinge werden auf Backgutträger aufgelegt, welche der Lagerung und dem Transport der Teiglinge dienen. Auf den Backgutträger aufgelegt gehen die Teiglinge auf, d. h. die Mikroorganismen erzeugen metabolisch durch Gärung das für Lockerung des Teiges notwendige Kohlendioxid, sie "garen". Bei der Gärung werden die Teiglinge unter konditionierten Temperaturverhältnissen gelagert. Sind die Backgutträger als Gärgutträger mit Seitenwänden ausgebildet, werden die Teiglinge nach dem Gären, in der Regel durch Stürzen des Backgutträgers auf entsprechende Backbleche umgelagert, sodass die Fläche, auf der die Teiglinge auf dem Gärgutträger aufgelegen haben, nun die freiliegende Oberseite des späteren Backwerks bildet. Im Anschluss erfolgt das Backen in einem aus dem Stand der Technik bekannten Backofen.

Bei Backgutträgern in Form von Peelboards ohne Seitenwände werden die Teiglinge nach dem Gären von einem Lader auf ein Förderband aufgenommen und beispielsweise in einen Durchlaufbackofen eingebracht.

Backgutträger aus Holz sind aus dem Stand der Technik seit Beginn des Bäckerhandwerks bekannt. Nachteilig ist bei solchen Backgutträgern, dass während der Gärung kaum Luft an die Unterseite des Teiglings gelangt und der Gärprozess daher auf der Oberseite und der Unterseite des Teiglings unterschiedlich verläuft. Desweiteren wird dem Teigling an der Unterseite über das Holz weniger Feuchtigkeit entzogen, als dies an der Oberseite der Fall ist, was beim anschließenden Backen zu einem unterschiedlichen Bräunungsgrad führt.

Den Nachteilen der mangelnden Belüftung und des unzureichenden Feuchtigkeitsentzugs wird seit langer Zeit dadurch begegnet, dass die Backgutträger mit einem Trägertuch, bevorzugt aus Baumwolle, belegt werden, bevor die Teiglinge aufgebracht werden. Bei den bekannten Backgutträgern mit Trägertüchern ist es unvermeidbar, dass die Teiglinge auf den Tüchern haften bleiben und daher nur schwer unbeschädigt abgenommen werden können. Desweiteren neigen die Trägertücher zur Schimmelbildung, so dass sie nach dem Gebrauch aufwändig gereinigt werden müssen, um den hohen Hygienestandards in Bäckereien zu genügen. Weiterhin müssen die Trägertücher aufwendig von Hand auf die Backgutträger aufgelegt oder aufgespannt werden.

Ein Gärgutträger mit Gärtuch ist beispielsweise in der DE 42 40 611 A1 gezeigt, wobei der Gärgutträger eine Lochplatte aus Metall aufweist, über welche ein Gärtuch mittels Klettverbindern befestigt wird, bevor die Teiglinge aufgelegt werden. Dieser Gärgutträger weist durch die Verwendung eines Gärtuchs die oben genannten Nachteile hinsichtlich der Reinigung sowie der Beeinträchtigung der Backgutoberfläche durch das Umlagern der Teiglinge auf ein Backblech auf. Desweiteren ist es für den Reinigungsprozess der Backgutträger erforderlich, die Gärtücher abzunehmen und zu waschen.

Ein anderer Gärgutträger, insbesondere eine Rahmen-Kippdiele, ist in AT 320 555 B gezeigt, wobei Teiglinge in Dielen auf einem Stofftuch zur Gärung gelagert werden. Die Dielen weisen stapelbare Rahmen auf, die, übereinandergestapelt, Öffnungen an den Stirnseiten aufweisen, durch welche nach Beendigung des Gärprozesses Luft zirkulieren kann.

Das Dokument DE 299 05 242 U1 offenbart eine Gärleiste bei der eine Backeinlage lösbar in einer Aufnahmewanne fixiert wird. Bei der Reinigung der Gärleiste kann die Backeinlage aus der Aufnahmewanne entfernt werden. Die Gärleiste und die Backeinlage werden separat gereinigt. Anschließend kann die Backeinlage wieder in der Aufnahmewanne fixiert werden.

Auch Gärgutträger, welche vollständig auf ein Trägertuch verzichten, sind aus dem Stand der Technik bekannt. Zum Beispiel ist aus der DE 10 2008 051 331 A1 der Anmelderin ein Gärgutträger bekannt, bei welchem die Teiglinge auf einer Auflageoberfläche mit Noppenstruktur aufliegen, die eine ausreichende Belüftung und Feuchtigkeitsabfuhr auf der Unterseite des Teiglings gestattet. Die bevorzugt aus Polypropylen einteilig spritzgegossenen Gärgutträger lösen bereits viele der oben genannten Probleme. Durch Materialwahl und Gestaltung der Gärgutträger ist es möglich, die Backgutqualität erheblich zu steigern und den Reinigungsaufwand signifikant zu reduzieren, da keine Gärtücher mehr verwendet werden. Allerdings haben diese Backgutträger den Nachteil, dass sich die Teiglinge beim Stürzen auf das Backblech mitunter nicht sofort lösen, sondern nur mit einem Zeitversatz von circa einer Minute, da die Teiglinge an den Noppen der Backgutträger anhaften. Dies wird im täglichen Einsatz als nachteilig empfunden.

Desweiteren trocknen die Teiglinge an den Auflagepunkten der Noppenstruktur weniger stark aus als an benachbarten Stellen, was nach dem Backen zu sichtbaren Farbänderungen führen kann, welche unerwünscht sind und den Kunden den Eindruck eines industriellen Backverfahrens vermitteln, das tatsächlich nicht gegeben ist.

Weiterhin ist aus der FR 2 93 1 035 A1 ein Gargutträger mit einer weichen, selbsttragenden, antihaftenden und zeilenartigen Membran bekannt, die eine Form oder eine Platte mit Vertiefungen zur Präparation von Nahrungserzeugnissen bildet. Die Membran besteht aus Silikon, welches mit einer Textilstruktur verstärkt ist. Die Textilstruktur ist dabei vollständig in die Silikonmatrix eingebettet.

Folglich ist es eine Aufgabe der vorliegenden Erfindung einen Backgutträger bereitzustellen, welcher die oben genannten Nachteile von Gärgutträgern vermeidet.

### 3. Zusammenfassung der Erfindung

Das genannte Problem wird gelöst durch einen Backgutträger gemäß Anspruch 1 sowie durch ein Verfahren zur Herstellung eines Backgutträgers gemäß Anspruch 12.

Insbesondere wird das Problem gelöst durch einen Backgutträger, aufweisend eine Trägerplatte und eine Vliesstoffschicht zur Aufnahme von Teiglingen, wobei die Vliesstoffschicht mit der Trägerplatte fest verbunden ist.

Ein "Backgutträger" kann jede Art von Träger umfassen, auf welchen Backgut bzw. Teiglinge jedweder Art zum Transport, zur Lagerung und zur Gärung aufgelegt werden kann, wie zum Beispiel Peelboards oder Gärgutträger.

Die Trägerplatte kann aus jedem beliebigen, festen Material bestehen, das dem Backgutträger eine ausreichende Stabilität zum Transport des Backguts verleiht.

Erfindungsgemäß umfasst der Backgutträger eine Vliesstoffschicht, welches an einer Oberseite freiliegend ist und diejenige Schicht darstellt, auf die die Teiglinge aufgelegt werden.

Durch die Verwendung einer Vliesstoffschicht ist eine gleichmäßige Abfuhr von Feuchtigkeit aus den Teiglingen während des Gärvorgangs gewährleistet. Dadurch wird eine gleichmäßige Trocknung der Teiglinge an der Unterseite wie an der freien Oberseite erzielt. Dadurch verbessert sich das Backergebnis. Selbst wenn bei ungünstigen klimatischen Bedingungen, durch ein "Schwitzen" der Teiglinge viel Feuchtigkeit auf den kalten Teiglingen kondensiert, wird diese Feuchtigkeit durch die Vliesstoffschicht ausreichend vom Teigling weggeführt.
Aufgrund der gleichmäßigen Trocknung durch die Vliesstoffschicht ergeben sich auch keine Abdrücke oder Muster, auf den fertigen Backwaren, wie sie bei Gärgutträgern mit Noppen auftreten können. Damit haben die fertigen Backwaren eine neutrale, handwerklich einwandfreie und damit ansprechende Oberfläche.
Durch die atmungsaktive und wasserdampfdurchlässige Oberfläche der Vliesstoffschicht wird ein optimales Feuchtigkeitsmanagement erreicht. Die Feuchtigkeit, die der Teigling abgibt, wird aufgenommen. Nach dem Gebrauch des Backgutträgers wird die Feuchtigkeit ebenso umgehend wieder an die Umgebung abgegeben. Diese sehr gute Atmungsaktivität ist auf die sehr große spezifische Oberfläche zurückzuführen, welche sich durch die Vielzahl feiner Mikrofilamente ergibt, welche die Vliesstoffschicht bilden, wobei Millionen von Mikrokanälen zwischen den Mikrofilamenten eine Luftzirkulation ermöglichen.
Dadurch, dass die Vliesstoffschicht fest mit der Trägerplatte verbunden ist, ergibt sich ein bevorzugt einteiliger Backgutträger, der als Ganzes gehandhabt und insbesondere auch maschinell gereinigt werden kann. Ein manuelles Befestigen und Abnehmen von Gärtüchern erübrigt sich. Damit entfällt auch die separate Reinigung derartiger Gärtücher und das Schimmelrisiko wird minimiert.

Die Oberfläche der erfindungsgemäßen Vliesstoffschicht ist sehr widerstandsfähig und ideal für dauerhafte anspruchsvolle Anwendungen geeignet. Ein Verschleiß von Gärtüchern, die aufgrund der materialstrapazierenden Waschvorgänge schnell spröde werden, tritt somit nicht auf, was sowohl Kosten als auch wertvolle Ressourcen im Sinne des Umweltschutzes spart.

Die Vliesstoffschicht erzeugt nur geringe Haftkräfte zwischen dem Backgutträger und dem Teigling. Dies gewährleistet ein sofortiges Ablösen der Teiglinge von dem Backgutträger sobald dieser gestürzt wird, um die Teiglinge auf ein Backblech umzulagern. Ein erfindungsgemäßer Backgutträger führt daher zu einer signifikanten Zeitersparnis während der Backvorbereitung. Desweiteren ermöglicht die Vliesstoffschicht ein rückstandsfreies Ablösen der Teiglinge von dem Backgutträger, was wiederum den Reinigungsaufwand reduziert.

Die feste Verbindung zwischen der Trägerplatte und der Vliesstoffschicht ermöglicht weiterhin eine vereinfachte Handhabung des Backgutträgers. Durch die feste Verbindung wird erreicht, dass ein Anwender beispielsweise beim Abnehmen der Backwaren, Herunterschieben der Backwaren oder während des Stürzens der Backgutträger nach dem Gären nicht zwei Einzelteile unabhängig voneinander handhaben muss, wie beispielsweise ein herkömmliches Gärtuch und einen entsprechenden Backgutträger, sondern nur ein Teil.

Dank der sehr großen spezifischen Oberfläche der Vliesstoffschicht und der in deren Zwischenräumen befindlichen Luft, besitzt der Backgutträger exzellente Trocknungseigenschaften nach einer Reinigung in einer aus dem Stand der Technik bekannten Spülmaschine. Er trocknet von selbst sehr schnell wieder ab und steht schnell zur erneuten Verwendung bereit. Auf aufwändige Trocknungsanlagen, wie zum Beispiel Gebläse kann somit verzichtet werden.

Erfindungsgemäß sind Backgutträger, wobei die Trägerplatte Kunststoff umfasst und Kunststoff der Trägerplatte in die Vliesstoffschicht eingedrungen ist.

Dringt der Kunststoff während der Herstellung des Backgutträgers in die Vliesstoffschicht ein, so wird ein fester Verbund geschaffen, welcher im Wesentlichen untrennbar miteinander verbunden ist. Dies ist vor allem vorteilhaft für die vereinfachte Handhabung der Backgutträger, da keine Gefahr besteht, dass sich die Vliesstoffschicht ablöst, was zu einer vorzeitigen Aussonderung des Backgutträgers führen würde.

Wird die Trägerplatte aus Kunststoff gefertigt, so lassen sich die Trägerplatte und die Vliesoberfläche hervorragend in allen gängigen Spülmaschinen reinigen und haben nur kurze Trocknungszeiten. Diese werden neben den oben beschriebenen vorteilhaften Eigenschaften des Vliesstoffes auch von den wasserabweisenden Eigenschaften von Kunststoffen begünstigt.

Bevorzugt sind Backgutträger, wobei die Trägerplatte aus Kunststoff spritzgegossen ist und Kunststoff der Trägerplatte an die Vliesstoffschicht angespritzt ist.

Ein Spritzgussverfahren erlaubt eine sehr kostengünstige und ressourcenschonende Herstellung der Backgutträger, da diese nach dem Spritzguss und dem Abkühlen bereits seine endgültige Form aufweisen und aufwendige Nacharbeitsschritte in der Regel entfallen. Weiterhin kann beim Spritzgießen die Vliesstoffschicht unmittelbar mit angespritzt werden, was Befestigungsvorgänge erübrigt und eine sehr gute feste Verbindung bereitstellt.

Weiter bevorzugt sind Backgutträger, wobei die Vliesstoffschicht an einer Oberseite freiliegend ist und an einer Unterseite vollständig in den Kunststoff eingegossen ist.

Ist die Vliesstoffschicht vorderseitig freiliegend, so können die oben bereits im Detail erläuterten positiven Eigenschaften der Vliesstoffschicht optimal zum Einsatz kommen. Im direkten Kontakt mit dem Teigling ist es dem Vliesstoff möglich, dem Teigling ein optimales Mikroklima an der Auflageseite bereitzustellen, indem eine ausreichende Belüftung durch die vielen Luftkanäle zwischen den Filamenten gewährleistet ist und auch eine optimale Feuchtigkeitsabfuhr von der Unterseite des Teiglings ermöglicht wird.

Durch das vollständige Eingießen der Rückseite des Vliesstoffes in den Kunststoff wird verhindert, dass der Vliesstoff an den Rändern ausfranst und zu Fusseln oder dergleichen führt. Desweiteren wird durch das vollständige Eingießen verhindert, dass sich die Vliesstoffschicht wellt oder ablöst, was zu einer erhöhten Lebensdauer des Backgutträgers beiträgt.

Weiter bevorzugt sind Backgutträger, wobei die Vliesstoffschicht aus wasserstrahlvernetzten Mikrofilamenten aus Polyester und/oder Polyamid besteht.

Ein besonders gut verwendbares Vliesstoffmaterial entsteht, wenn Mikrofilamente aus Polyester und/oder Polyamid wasserstrahlvernetzt werden. Dadurch entsteht eine verfestigte, abriebresistente Vliesstoffschicht, deren Mikrofilamente gut aneinanderhaften.

Weiter bevorzugt sind Backgutträger, wobei die Mikrofilamente der Vliesstoffschicht eine Dicke von 0,05 - 0,30 dtex, bevorzugt 0,10 - 0,20 dtex, weiter bevorzugt eine Dicke von 0,15 dtex aufweisen.

Über die Feinheit der Mikrofilamente lassen sich vor allem die
Feuchteabfuhreigenschaften des Backgutträgers einstellen. Feinere Filamente bedeuten bei gleicher Dichte der Vliesstoffschicht eine Erhöhung der Oberfläche. Aufgrund der sehr feinen Mikrofilamente wird hier eine erhebliche Oberflächenvergrößerung erlangt, was die Feuchtigkeitsabfuhr und die Trocknungseigenschaften des Backgutträgers verbessert.

Eine Dicke der Mikrofilamente von 0,05 - 0,30 dtex (0,005 g - 0,03 g pro 1.000 m Faserlänge) hat sich als besonders gut geeignet herausgestellt. Noch geeigneter ist eine Dicke von 0,10 - 0,20 dtex (0,01 g - 0,02 g / 1.000 m Faserlänge) bzw. eine Dicke von 0,15 dtex (0,015 g / 1.000 m Faserlänge).

Weiter bevorzugt sind Backgutträger, wobei die Vliesstoffschicht ein Flächengewicht von 50 - 200 g/m², bevorzugt von 80 - 120 g/m² und noch bevorzugter von 100 g/m² aufweist.

Ein Flächengewicht der Vliesstoffschicht von 50 - 200 g/m², bevorzugt von 80 - 120 g/m² und noch bevorzugter von 100 g/m² hat sich für die Anwendung in einem Backgutträger als besonders geeignet herausgestellt.

Weiter bevorzugt sind Backgutträger, wobei die Vliesstoffschicht eine Dicke von 0,3 - 1,0 mm, bevorzugt von 0,4 - 0,6 mm und noch bevorzugter von 0,48 mm aufweist.

Über die Dicke der Vliesstoffschicht lassen sich Belüftungs- und Trocknungseigenschaften des Backgutträgers während der Auslegung einstellen. Eine dickere Vliesstoffschicht weist ein höheres Volumen auf und kann somit eine höhere Feuchtigkeitsmenge aufnehmen. Eine Dicke der Vliesstoffschicht von 0,3 - 1,0 mm, bevorzugt von 0,4 - 0,6 mm und noch bevorzugter von 0,48 mm, hat sich als besonders geeignet herausgestellt, um eine gute Haftung an einer angespritzten Kunststoff-Trägerplatte und gleichzeitig eine ausreichende Feuchtigkeitsaufnahme zu gewährleisten.

Weiter bevorzugt sind Backgutträger, wobei der Kunststoff der Trägerplatte in eine Tiefe von 10 - 40 % der Dicke der Vliesstoffschicht in die Vliesstoffschicht eindringt.

Die Eindringtiefe des Kunststoffs in die Vliesstoffschicht ist ein Maß für die zu erwartende Haftkraft zwischen Vliesstoffschicht und Trägerplatte. Jedoch steht der mit Kunststoff durchsetzte Bereich der Vliesstoffschicht nicht für eine Entfeuchtung und Belüftung des Teiglings zur Verfügung. Mit einer Eindringtiefe des Kunststoffs von 10 - 40 % der Dicke der Vliesstoffschicht in die Vliesstoffschicht wird beiden Zielen ausreichend Rechnung getragen.

Weiter bevorzugt ist ein Backgutträger, der als Gärgutträger ausgebildet ist, wobei der Backgutträger weiterhin Seitenwände aufweist.

Ein Gärgutträger ist eine Ausführungsform eines erfindungsgemäßen Backgutträgers mit Seitenwänden. Gärgutträger werden hauptsächlich dazu verwendet, Teiglinge nach der Formung zu transportieren und insbesondere während der Gärung zu lagern. Die Seitenwände der Gärgutträger ermöglichen dabei eine vereinfachte Handhabung der mit Teiglingen bestückten Gärgutträger, da so eine Deformation der Teiglinge durch eine mögliche unbedachte Bewegung des Bäckers vermieden wird. Die Teiglinge sind während des Garens von fünf Seiten geschützt, können aber dennoch von oben überwacht oder weiterverarbeitet werden, z.B. mit Salz oder Hagelzucker bestreut werden.

Weiter bevorzugt sind Backgutträger, wobei die Seitenwände so ausgebildet sind, dass mehrere Backgutträger übereinander gestapelt werden können.

Die Seitenwände sind in ihrer Höhe bevorzugt so dimensioniert, dass sie über die garenden Teiglinge hinausragen, so dass die Backgutträger gestapelt werden können, ohne die Teiglinge zu deformieren. Somit ist eine platzsparende Lagerung der Gärgutträger samt Teiglingen während des Garvorgangs möglich. Aufwändige Gestelle zum Ablegen von bestückten Backgutträgern werden somit überflüssig.

In einer weiteren bevorzugten Ausführungsform ist der Backgutträger als Peelboard ausgebildet.

Das Peelboard ist eine Ausführungsform eines Backgutträgers, welcher im Wesentlichen aus einer einfachen Trägerplatte und der Vliesstoffschicht besteht. In der Regel weist ein Peelboard keine Seitenwände auf.

Peelboards kommen in der Regel in voll-automatisierten Großbäckereien zum Einsatz, um darauf Teiglinge zu transportieren und zu gären. Nach dem Gären werden die Teiglinge von den Peelboards durch einen Lader abgenommen und in den Backofen eingefahren.

Das oben genannte Problem wird ebenfalls gelöst durch ein Verfahren zum Herstellen eines Backgutträgers, aufweisend die folgenden Schritte:
a. Einlegen einer Vliesstoffschicht in eine Spritzgussform für eine Trägerplatte aus Kunststoff;
b. Spritzgießen der Trägerplatte mit einem Kunststoff, wobei Kunststoff der Trägerplatte in eine Unterseite der Vliesstoffschicht eindringt und eine Oberseite der Vliesstoffschicht nach dem Spritzgießen freiliegt.

Der Backgutträger wird vorteilhafterweise im Kunststoff-Spritzgussverfahren hergestellt. Bevor der Kunststoff in das das Werkzeug eingespritzt wird, wird die Vliesstoffschicht in die Spritzgussform eingelegt. Dann geht die Kunststoffmasse mit der Vliesstoffschicht unmittelbar beim Spritzen eine feste Verbindung ein, wodurch weitere Befestigungsschritte nicht notwendig sind. Das Ergebnis ist unmittelbar der fertige Backgutträger. Hierbei dringt Kunststoff nur bis zu einer gewissen Tiefe in die Rückseite der Vliesstoffschicht ein und lässt jedoch die Oberseite der Vliesstoffschicht frei.

### 4. Kurze Beschreibung der Figuren

Im Folgenden werden bevorzugte Ausführungsformen der Erfindung in Bezug auf die Figuren beschrieben, in denen zeigt:
- Fig. 1: eine Aufsicht auf eine Ausführungsform eines Peelboards gemäß der vorliegenden Erfindung;
- Fig. 2: eine Seitenansicht des Peelboards von Fig. 1;
- Fig. 3: eine Untersicht des Peelboards von Fig. 1;
- Fig. 4: eine Aufsicht auf eine Ausführungsform eines Gärgutträgers gemäß der vorliegenden Erfindung;
- Fig. 5: eine Seitenansicht des Gärgutträgers von Fig. 4;
- Fig. 6: eine Untersicht des Gärgutträgers von Fig. 4; und
- Fig. 7: eine Querschnittsansicht eines Details einer Trägerplatte mit angespritzter Vliesstoffschicht.

### 5. Beschreibung bevorzugter Ausführungsformen

Im Folgenden werden bevorzugte Ausführungsformen der Erfindung mit Bezug auf die dazugehörigen Figuren beschrieben. Auch wenn es nicht explizit beschrieben ist, können Merkmale einer bestimmten Ausführungsform gleichermaßen in einer anderen Ausführungsform verwendet werden, wenn dies angebracht ist.

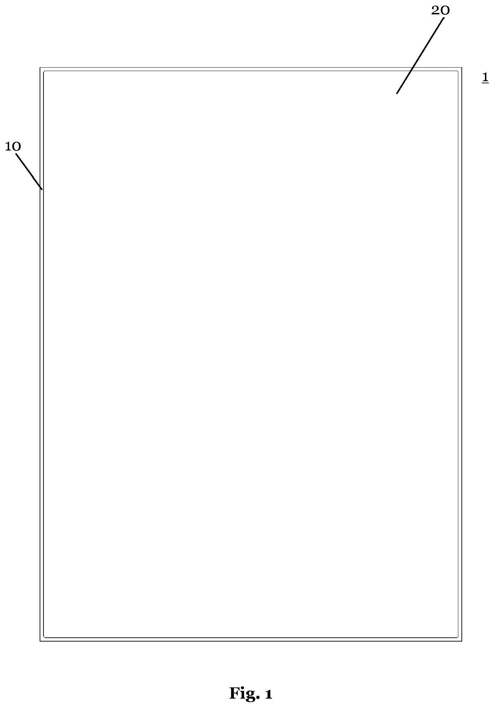

In den Figuren 1 - 3 ist ein Backgutträger in Form eines Peelboards 1 gemäß einer Ausführungsform der vorliegenden Erfindung dargestellt. Das Peelboard 1 ist eine Ausführungsform eines Backgutträgers 1, 2, das zum Transport und der Lagerung von Teiglingen in industriellen Backanlagen Verwendung findet. Das Peelboard 1 weist eine Trägerplatte 10 und eine Vliesstoffschicht 20 auf, die fest mit der Trägerplatte 10 verbunden ist. Die Vliesstoffschicht 20 bedeckt im Wesentlichen die gesamte Fläche der Trägerplatte 10 auf deren Oberseite 40.

Die Trägerplatte 10 kann auch aus einem Kunststoffmaterial bestehen, so dass die Verbindung mit der Vliesstoffschicht 20 bevorzugt durch Hinterspritzen des Kunststoffs bei einem Spritzgussvorgang hergestellt wird, wie er im Folgenden für Gärgutträger 2 genauer beschrieben wird.

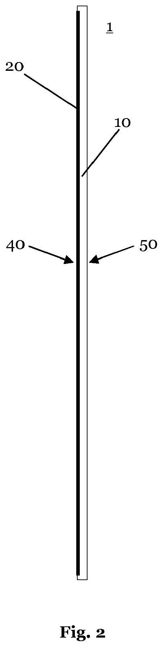

Wie in Fig. 2 dargestellt, ist die Vliesstoffschicht 20 an der Oberseite 40 der Trägerplatte 10 angeordnet. Die Oberseite 40 dient der Aufnahme von Teiglingen (nicht dargestellt). Der Oberseite 40 ist die Unterseite 50 entgegengesetzt.

Wie aus der Seitenansicht ersichtlich, weist das Peelboard 1 keine Seitenwände auf, damit die Teiglinge problemlos von einem Lader abgenommen werden können.

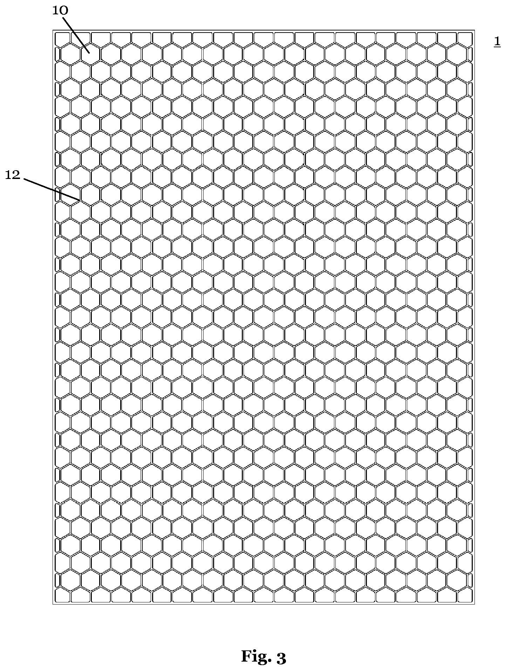

Auf der Unterseite 50 des Peelboards 1 kann, wie in Fig. 3 gezeigt, auf der Trägerplatte 10 eine Stützstruktur 12 aufgebracht sein. Diese Stützstruktur 12 kann wie in Fig. 3 dargestellt eine Wabenstruktur aufweisen. Diese hat sich aufgrund der guten Kraftleitungseigenschaften als besonders bevorzugt herausgestellt. Andere Stützstrukturformen, wie Rippen, Karos, Rauten und dergleichen können ebenfalls verwendet werden. Auch ist es möglich, die Unterseite 50 des Peelboards 1 ohne jegliche Stützstruktur 12 vorzusehen, vor allem dann, wenn die Dicke der Trägerplatte 10 so dimensioniert wurde, dass sie allein stabil genug ist, die vorgesehenen statischen und dynamischen Belastungen auszuhalten.

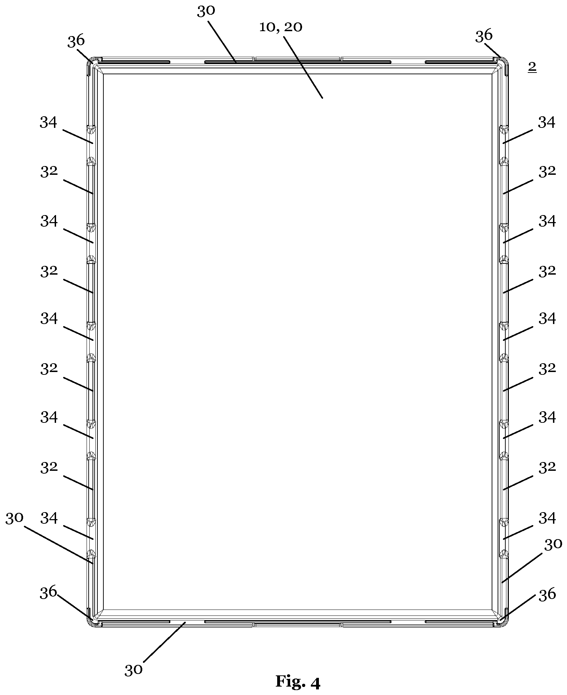

Die Figuren 4 - 6 zeigen einen Backgutträger in Form eines Gärgutträgers 2 gemäß der vorliegenden Erfindung. Der Gärgutträger 2 ist wie das Peelboard 1 eine Ausführungsform eines Backgutträgers 1, 2 und unterscheidet sich von dem Peelboard 1 vor allem durch hochgezogene Seitenwände 30. Auch hier bedeckt die Vliesstoffschicht 20 im Wesentlichen die gesamte Fläche der Trägerplatte 10 auf deren Oberseite 40.

Die Seitenwände 30 weisen bevorzugt eine Höhe auf, welche größer ist als die erwartete Höhe der zu verarbeitenden Teiglinge. So werden die Teiglinge während des Garens geschützt und die Handhabung der Teiglinge wird vor allem in nicht- oder teilautomatischen Fertigungen deutlich erleichtert.

Die Seitenwände 30 weisen Auflageflächen 32 auf, auf denen ein darüber angeordneter Gärgutträger 2 aufliegen kann, um die Gewichtskräfte nach unten über eine möglichst große Randfläche abzuleiten. So wird eine punktuelle Belastung vermieden, was auch zu Materialeinsparungen bei der Auslegung der Gärgutträger 2 führt.

Die Auflageflächen 32 wechseln sich in der vorliegenden Ausführungsform mit Lüftungsöffnungen 34 ab, welche für einen ausreichenden Luftaustausch mit der Umgebung sorgen. Dieser Luftaustausch ist für ein optimales Gar- und Trocknungsklima rund um die Teiglinge vorteilhaft.

An den Ecken der Seitenwände 30 des Gärgutträgers 2 sind Zentrierhilfen 36 in Form von Nasen vorgesehen, welche bei der Ausrichtung und beim Stapeln der Gärgutträger 2 zum Einsatz kommen. Durch diese Zentrierhilfen 36 ist eine deutlich vereinfachte Handhabung und ein stabileres Stapeln der Gärgutträger 2 möglich, da übereinander gestapelte Gärgutträger 2 ineinander eingreifen und so für einen stabilen Verbund von Gärgutträgern 2 sorgen.

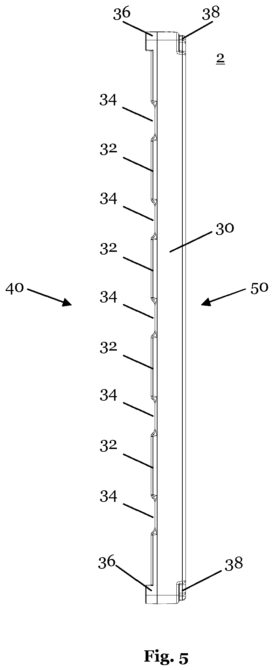

Fig. 5 zeigt eine Seitenansicht des Gärgutträgers von Fig. 4, welche insbesondere Aussparungen 38 für die Zentrierhilfen 36 zeigt. Diese befinden sich bevorzugt auf der Unterseite 50 der Trägerplatte 10 und sind komplementär zu den Zentrierhilfen 36 ausgebildet, um diese beim Stapeln aufzunehmen.

Vor allem in kleineren, nicht- bis teilautomatisierten Backbetrieben ist diese Form stapelbarer Backgutträger 2 besonders bevorzugt, da hier durch das Wegfallen von Gestellen eine Platzeinsparung und eine Kostenreduktion erzielt werden kann.

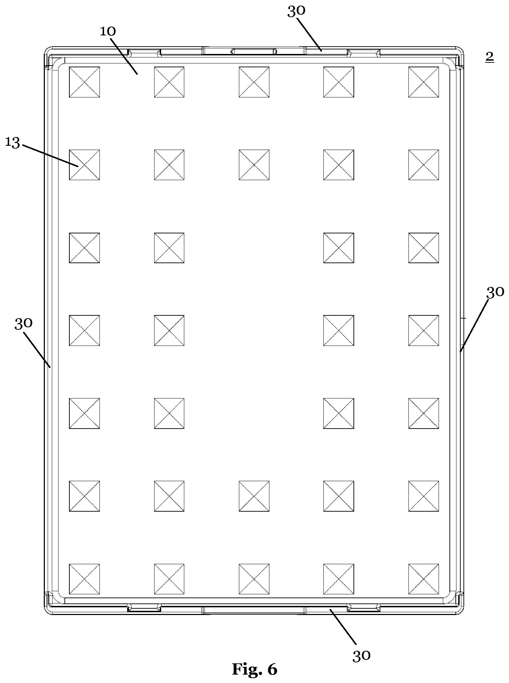

In Fig. 6 ist die Unterseite 50 des Gärgutträgers von Fig. 4 und 5 dargestellt. In dieser Ausführungsform weist die Trägerplatte an der Unterseite leichte Vertiefungen 13 auf, um bei im Wesentlichen unveränderter Stabilität Material der Trägerplatte 10 zu sparen.

Erfindungsgemäße Backgutträger 1, 2 zeichnen sich durch die Verwendung einer Vliesstoffschicht 20 als Auflage für die Teiglinge aus. Für die Vliesstoffschicht 20 wird bevorzugt ein Polyester- oder Polyamidvliesstoff verwendet. Auch Mischvliesstoffe sind möglich. Bevorzugt sind Vliesstoffschichten 20 aus wasserstrahlvernetzten Mikrofilamenten, die eine besonders große Oberfläche und damit besonders gute Feuchtigkeitsaufnahme bieten.

Besonders bevorzugt wird als Vliesstoff 20 das Material evolon^{®} der Firma Freudenberg & Co. KG verwendet. Bei der Herstellung von evolon^{®} werden Polyester- und Polyamidgranulate in endlose, im Querschnitt sternenförmig strukturierte Filamente umgewandelt, welche dann gleichmäßig auf einer Unterlage ausgebreitet werden. Im Anschluss werden die Filamente mittels Hochdruck-Wasserstrahlen zu Mikrofilamenten aufgesplittet, wobei die Mikrofilamente durch die Wasserstrahlen gleichzeitig fest miteinander verknüpft werden und sich so verfestigen, dass ein textiles Material entsteht.

Verwendet wird das Material evolon^{®} bereits für Reinigungstücher, bedruckbare Gewebe in der Werbeindustrie (z. B. Fahnen), Bettwäsche, technische Verpackungen, Sonnenschutzrollos, Funktionsbekleidung etc. evolon^{®} zeichnet sich neben der besonders guten Feuchtigkeitsaufnahme und -abgabe besonders durch seine gute Verarbeitbarkeit und die niedrigen Haftkräfte zu den hierauf aufliegenden Teiglingen auf.

Die Vliesstoffschicht 20 weist bevorzugt eine Lebensmittelzulassung auf, um in der Lebensmittelproduktion eingesetzt werden zu dürfen.

Erfindungsgemäß ist die Vliesstoffschicht 20 fest mit der Trägerplatte 10 verbunden. Diese Verbindung kann beispielsweise durch ein Eindringen von Kunststoff der Trägerplatte 10 in die Vliesstoffschicht 20 erzeugt werden oder von einer zusätzlich auf die Trägerplatte aufgebrachten Klebstoffschicht 16. Das Eindringen von Kunststoff in die Vliesstoffschicht 20 kann durch unterschiedliche Verfahren erfolgen, bei denen der Kunststoff noch flüssig ist oder zumindest teilweise flüssig gemacht wird. Dies kann durch Zufuhr von Wärme, durch Laserschweißen, etc. erfolgen. Bevorzugt ist ein Hinterspritzen des Kunststoffs bei einem Spritzgussvorgang, wobei die Vliesstoffschicht 20 in die Spritzgussform eingelegt wird. Durch das Hinterspritzen der Vliesstoffschicht 20 geht diese mit der Trägerplatte 10 einen in der Regel nichtlösbaren Verbund ein.

Selbstverständlich können beim Spritzgießen der Trägerplatte 10 die Seitenwände 30 gleichzeitig mitgespritzt werden.

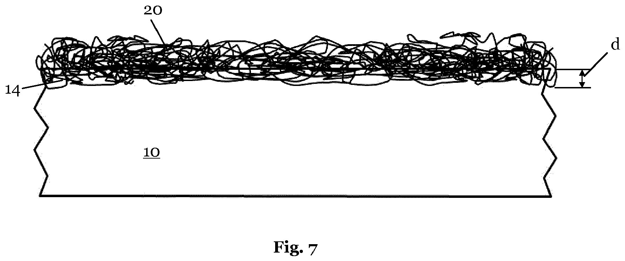

Wie in Fig. 7 dargestellt, ist der Übergang zwischen der Trägerplatte 10 und der Vliesstoffschicht 20 fließend. Es bildet sich ein Übergangsbereich 14 der Dicke d heraus, in welchem der Kunststoff der Trägerplatte 10 mit den Fasern der Vliesstoffschicht 20 durchsetzt ist. Der Übergangsbereich 14 sorgt somit für die feste Verbindung zwischen der Trägerplatte 10 und der Vliesstoffschicht 20. Der Übergangsbereich 14 hat bevorzugt eine Dicke d von 10 - 40 % der Dicke der Vliesstoffschicht 20.

Bevorzugt wird als Kunststoff der Trägerplatte 10 und der Seitenwände 30 ein auf Polypropylen basierender Kunststoff verwendet. Dies schließt sowohl reine Propylen-Kunststoffe sowie durch verschiedene Additive angepasste Compounds mit ein. Polypropylen hat die Eigenschaften, zum einen besonders günstig zu sein, zum anderen aber auch leicht verarbeitbar und belastbar zu sein. Das teilkristalline Polypropylen ist geruchlos und hautverträglich. Es ist für Anwendungen im Lebensmittelbereich und der Pharmazie geeignet und physiologisch unbedenklich. Des Weiteren zeichnet sich Polypropylen im vorliegenden Fall weiterhin durch seine Fähigkeit aus, schnell abzutrocknen, was die Wiederbenutzung der Backgutträger 1, 2 erheblich beschleunigt.

Im Hinblick auf das oben Beschriebene wurde ein Backgutträger 1, 2 vorgestellt, welcher es erstmals gestattet, ein optimales Mikroklima für Teiglinge während des Garens bereitzustellen. Durch den erfindungsgemäßen Einsatz einer Vliesstoffschicht 20 wird ein gleichmäßiges Abtrocknen und Belüften der Unterseite des Teiglings ermöglicht, was zu einer einheitlichen Kruste der fertig gebackenen Backware führt. Durch die erfindungsgemäße Vliesstoffschicht 20 wird ein Anhaften der Teiglinge weitestgehend vermieden, sodass ein sofortiges und darüber hinaus rückstandsfreies Ablösen der Teiglinge ermöglicht wird. Beeinträchtigungen der Backgutoberfläche werden vermieden. Durch die integrierte Vliesstoffschicht 20 wird es erstmals ermöglicht, die genannten backtechnischen Vorteile ohne weitere Hilfsmittel wie Gärtücher zu erzielen. Die Reinigung der Backgutträger 1, 2 kann in üblichen Spülmaschinen erfolgen. Damit wird insgesamt ein sehr wirtschaftliches und hygienisches Handhaben und Gären von Teiglingen realisiert.

### Referenzzeichenliste

- 1: Peelboard
- 2: Gärgutträger
- 10: Trägerplatte
- 12: Stützstruktur
- 13: Vertiefungen
- 14: Übergangsbereich
- 20: Vliesstoffschicht
- 30: Seitenwand
- 32: Auflage
- 34: Lüftungsöffnung
- 36: Zentrierhilfe
- 38: Aussparung für Zentrierhilfe
- 40: Oberseite
- 50: Unterseite
- d: Dicke des Übergangsbereichs

## Patentansprüche

1. Backgutträger (1, 2), aufweisend
a. eine Trägerplatte (10); und
b. eine Vliesstoffschicht (20), die an einer Oberseite (40) freiliegend ist, zur Aufnahme von Teiglingen, wobei die Vliesstoffschicht (20) mit der Trägerplatte (10) fest verbunden ist; **dadurch gekennzeichnet, dass**
c. die Trägerplatte (10) Kunststoff umfasst und Kunststoff der Trägerplatte (10) in die Vliesstoffschicht (20) eingedrungen ist.

2. Backgutträger gemäß Anspruch 1, wobei die Trägerplatte (10) aus Kunststoff spritzgegossen ist und Kunststoff der Trägerplatte (10) an die Vliesstoffschicht (20) angespritzt ist.

3. Backgutträger gemäß Anspruch 1 oder 2, wobei die Vliesstoffschicht (20) an einer Unterseite (50) vollständig in den Kunststoff eingegossen ist.

4. Backgutträger gemäß einem der Ansprüche 1 bis 3, wobei die Vliesstoffschicht (20) aus wasserstrahlvernetzten Mikrofilamenten aus Polyester und/oder Polyamid besteht.

5. Backgutträger gemäß Anspruch 4, wobei die Mikrofilamente eine Dicke von 0,05 - 0,30 dtex, bevorzugt 0,10 - 0,20 dtex, weiter bevorzugt eine Dicke von 0,15 dtex aufweisen.

6. Backgutträger gemäß einem der Ansprüche 1 bis 5, wobei die Vliesstoffschicht (20) ein Flächengewicht von 50 - 200 g/m², bevorzugt von 80 - 120 g/m² und noch bevorzugter von 100 g/m² aufweist.

7. Backgutträger gemäß einem der Ansprüche 1 bis 6, wobei die Vliesstoffschicht (20) eine Dicke von 0,3 - 1,0 mm, bevorzugt von 0,4 - 0,6 mm und noch bevorzugter von 0,48 mm aufweist.

8. Backgutträger gemäß einem der Ansprüche 1 bis 7, wobei der Kunststoff der Trägerplatte (10) in eine Tiefe (d) von 10 - 40 % der Dicke der Vliesstoffschicht (20) in die Vliesstoffschicht (20) eindringt.

9. Backgutträger gemäß einem der Ansprüche 1 bis 8, der als Gärgutträger (2) ausgebildet ist, wobei der Backgutträger (2) weiterhin Seitenwände (30) aufweist.

10. Backgutträger gemäß Anspruch 9, wobei die Seitenwände (30) so ausgebildet sind, dass mehrere Gärgutträger (2) übereinander gestapelt werden können.

11. Backgutträger gemäß einem der Ansprüche 1 bis 8, der als Peelboard (1) ausgebildet ist.

12. Verfahren zum Herstellen eines Backgutträgers (1, 2), aufweisend die folgenden Schritte:
a. Einlegen einer Vliesstoffschicht (20) in eine Spritzgussform für eine Trägerplatte (10);
b. Spritzgießen der Trägerplatte (10) mit einem Kunststoff, wobei Kunststoff der Trägerplatte (10) in eine Unterseite (50) der Vliesstoffschicht (20) eindringt und eine Oberseite (40) der Vliesstoffschicht (20) nach dem Spritzgießen freiliegt.

## Claims

1. Bakery products carrier (1, 2), comprising
a. a carrier plate (10); and
b. a non-woven fabric layer (20), exposed on a surface (40), for the reception of dough pieces, wherein the non-woven fabric layer (20) is rigidly connected to the carrier plate (10); **characterized in that**
c. the carrier plate (10) comprises plastic material and plastic material of the carrier plate (10) is penetrated into the non-woven fabric layer (20).

2. Bakery products carrier according to claim 1, wherein the carrier plate (10) is injection-molded of plastic material and plastic material of the carrier plate (10) is injection-molded to the non-woven fabric layer (20).

3. Bakery products carrier according to claim 1 or 2, wherein the non-woven fabric layer (20) on a lower surface (50) is completely molded into the plastic material.

4. Bakery products carrier according to one of the claims 1 to 3, wherein the non-woven fabric layer (20) is made of water-jet cross-linked micro filaments from polyester and/or polyamide.

5. Bakery products carrier according to claim 4, wherein the micro filaments comprise a thickness of 0.05 - 0.30 dtex, preferably 0.10 - 0.20 dtex, more preferably a thickness of 0.15 dtex.

6. Bakery products carrier according to one of the claims 1 to 5, wherein the non-woven fabric layer (20) comprises a surface weight of 50 - 200 g/m², preferably of 80 - 120 g/m² and more preferably of 100 g/m².

7. Bakery products carrier according to one of the claims 1 to 6, wherein the non-woven fabric layer (20) comprises thickness of 0.3 - 1.0 mm, preferably of 0.4 - 0.6 mm and more preferably of 0.48 mm.

8. Bakery products carrier according to one of the claims 1 to 7, wherein the plastic material of the carrier plate (10) penetrates into a depth (d) of 10 - 40 % of the thickness of the non-woven fabric layer (20) into the non-woven fabric layer (20).

9. Bakery products carrier according to one of the claims 1 to 8, which is formed as a carrier (2) for products to be fermented, wherein the bakery products carrier (2) further comprises sidewalls (30).

10. Bakery products carrier according to claim 9, wherein the sidewalls (30) are formed such that multiple carriers (2) for products to be fermented may be stacked on top of each other.

11. Bakery products carrier according to one of the claims 1 to 8, which is formed as a peel-board (1).

12. Method for manufacturing a bakery products carrier (1, 2) comprising the following steps:
a. Inserting a non-woven fabric layer (20) into an injection mold for a carrier plate (10);
b. Injection-molding of the carrier plate (10) with a plastic material, wherein plastic material of the carrier plate (10) penetrates into a lower surface (50) of the non-woven fabric layer (20) and a surface (40) of the non-woven fabric layer (20) is exposed after the injection-molding.

## Revendications

1. Support pour pâtisseries (1, 2), comprenant :
a. une plaque de support (10) ; et
b. une couche de textile non-tissé (20), qui est dégagée au niveau d'un côté supérieur (40), servant à recevoir des pâtons, dans lequel la couche de textile non-tissé (20) est reliée de manière solidaire à la plaque de support (10) ; **caractérisé en ce que**
c. la plaque de support (10) comprend du plastique et **en ce que** le plastique de la plaque de support (10) a pénétré dans la couche de textile non-tissé (20).

2. Support pour pâtisseries selon la revendication 1, dans lequel la plaque de support (10) est moulée par injection à partir de plastique et le plastique de la plaque de support (10) est appliqué par injection au niveau de la couche de textile non-tissé (20).

3. Support pour pâtisseries selon la revendication 1 ou 2, dans lequel la couche de textile non-tissé (20) est noyée totalement dans le plastique au niveau d'un côté inférieur (50).

4. Support pour pâtisseries selon l'une quelconque des revendications 1 à 3, dans lequel la couche de textile non-tissé (20) est constituée de microfilaments enchevêtrés par jet d'eau et composés de polyester et/ou de polyamide.

5. Support pour pâtisseries selon la revendication 4, dans lequel les microfilaments présentent une épaisseur correspondant à 0,05-0,30 dtex, de manière préférée à 0,10-0,20 dtex, de manière davantage préférée une épaisseur correspondant à 0,15 dtex.

6. Support pour pâtisseries selon l'une quelconque des revendications 1 à 5, dans lequel la couche de textile non-tissé (20) présente une masse surfacique de 50-200 g/m², de manière préférée de 80-120 g/m² et de manière davantage préférée de 100 g/m².

7. Support pour pâtisseries selon l'une quelconque des revendications 1 à 6, dans lequel la couche de textile non-tissé (20) présente une épaisseur de 0,3-1,0 mm, de manière préférée de 0,4-0,6 mm et de manière davantage préférée de 0,48 mm.

8. Support pour pâtisseries selon l'une quelconque des revendications 1 à 7, dans lequel le plastique de la plaque de support (10) pénètre dans la couche de textile non-tissé (20) jusqu'à une profondeur (d) de 10-40 % de l'épaisseur de la couche de textile non-tissé (20).

9. Support pour pâtisseries selon l'une quelconque des revendications 1 à 8, lequel est réalisé sous la forme d'un support de produit à cuire (2), dans lequel le support pour pâtisseries (2) présente par ailleurs des parois latérales (30).

10. Support pour pâtisseries selon la revendication 9, dans lequel les parois latérales (30) sont réalisées de telle sorte que plusieurs supports de produits à cuire (2) peuvent être empilés les uns sur les autres.

11. Support pour pâtisseries selon l'une quelconque des revendications 1 à 8, lequel est réalisé sous la forme d'un support de pousse (1).

12. Procédé servant à fabriquer un support pour pâtisseries (1, 2), comprenant les étapes suivantes :
a. placement d'une couche de textile non-tissé (20) dans un moule par injection pour une plaque de support (10) ;
b. moulage par injection de la plaque de support (10) à l'aide d'un plastique, dans lequel le plastique de la plaque de support (10) pénètre dans un côté inférieur (50) de la couche de textile non-tissé (20) et laisse dégagé un côté supérieur (40) de la couche de textile non-tissé (20) après le moulage par injection.
